# EUROPÄISCHE PATENTSCHRIFT

(11) **EP 1 124 766 B1**
(45) Veröffentlichungstag und Bekanntmachung des Hinweises auf die Patenterteilung: **07.08.2002**
(21) Anmeldenummer: 99952624.7
(22) Anmeldetag: 14.10.1999
(51) Int. Cl.: C03B 32/00, C03B 23/049, C03B 23/047

(54) **QUARZGLASPLATTEN HOHER BRECHZAHLHOMOGENITÄT**
QUARTZ GLASS PLATES WITH HIGH REFRACTIVE INDEX HOMOGENEITY
PANNEAUX DE VERRE QUARTZEUX A INDICE DE REFRACTION TRES HOMOGENE

(30) Priorität: 28.10.1998 DE 19850265
(43) Veröffentlichungstag der Anmeldung: 22.08.2001
(73) Patentinhaber: Schott Glas, 55122 Mainz (DE)
(72) Erfinder: MARTIN, Rolf, D-07743 Jena (DE); MENZEL, Andreas, D-07745 Jena (DE); CORIAND, Frank, D-07745 Jena (DE); SCHMIDT, Wolfgang, D-07743 Jena (DE)
(74) Vertreter: Pfeiffer, Rolf-Gerd, Dipl.-Phys.
(86) Internationale Anmeldenummer: EP9908136
(87) Internationale Veröffentlichungsnummer: WO0024684

(56) Entgegenhaltungen:
- EP-A- 0 673 888

## Beschreibung

Die Erfindung betrifft ein Verfahren zur Herstellung von Quarzglasplatten hoher Brechzahlhomogenität gemäß der Gattung der Patentansprüche.

Bekanntlich werden zur Herstellung homogener, schlierenfreier Quarzglasplatten Quarzglaswalzen aufgeschmolzen und diesen durch thermische Umformung die gewünschte Plattenform gegeben. Ggf. ist vor der thermischen Umformung die äußerste (Mantel-) Schicht einer Quarzglaswalze mit zu geringer Brechzahlhomogenität abzuarbeiten. Die Herstellung der Quarzglaswalzen ist bspw. nach DE-A-32 26 451 und DE-A-42 03 287 möglich. Eine solche Quarzglaswalze hat Brechzahlhomogenitäten, die in axialer Richtung und in Umfangsrichtung besser als 2.10⁻⁶ und nach dem Abarbeiten des Walzenrandes in radialer Richtung besser als 2.10-5 sind.

Für hochgenaue rotationssymmetrische optische Teile kann deshalb nur ein gewisser Kernbereich der Quarzglaswalze genutzt werden, welcher zumeist mit einem Diamanthohlbohrer herausgebohrt wird. Dadurch bleibt ein äußerer Zylinderring ungenutzt. Dieser Zylinderring kann bisher bspw. für Teile genutzt werden, die nur geringe oder keine Anforderungen an die optische Homogenität verlangen.

Bei der Herstellung von Quarzglasplatten kommt es oft nicht auf die rotationssymmetrische Anordnung und Einhaltung von Homogenitäten, sondern auf die Einhaltung der Homogenitäten an sich an, die axial in der Ausgangs-Quarzglaswalze mit ≤ 2.10⁻⁶ gewährleistbar ist.

Aufgabe der Erfindung ist es nun, ein Verfahren anzugeben, das die zylindrischen oder ähnlichen Ringe zur Herstellung von optischen Bauteilen hoher Brechzahlhomogenität aus Quarzglaswalzen nutzt.

Gemäß der Erfindung wird die Aufgabe durch die kennzeichnenden Merkmale des ersten Patentanspruchs gelöst. Vorteilhaft ist der schichtungsfreie Ausgangs-Quarzglaskörper eine zylindrische Walze, die vorzugsweise durch konzentrische Längsschnitte in schalenförmige Teile zerlegt wird, nachdem ggf. seine äußere Schicht abgearbeitet, bspw. abgeschliffen worden ist. Grundsätzlich wird gemäß der Erfindung aus dem Quarzglaskörper ein in Richtung der Achse X-X, parallel zu ihr verlaufender innerer, vorzugsweise rotationssymmetrischer Bereich mit hoher, zumindest aber ausreichender Brechzahlhomogenität herausgetrennt. Der dabei entstehende Restkörper, vorzugsweise ein Zylinderring, wird in mindestens zwei, vorteilhaft drei Teile (Segmente) längs aufgetrennt, jedes dieser Teile in eine entsprechende Form gegeben und so erhitzt, daß es sich in dieser Form zu einer Quarzglasplatte gewünschter Dicke umformt. Vor dem Einlegen der schalenförmigen Teile in die Form werden vorteilhaft ihre radial gerichteten Begrenzungsflächen so beschnitten, daß innerer Umfang äußerer Umfang in der Relation 1 zu 1,4 bis 1,6 zueinander stehen; mit anderen Worten: Der innere Umfang ist mit 1,4 ... 1,6 zu multiplizieren, um den äußeren Umfang zu erhalten. Die Dicke der umgeformten Platte soll möglichst nicht wesentlich von der radial gerichteten Dicke des ihr zugrunde liegenden schalenförmigen Teils abweichen. Die Segmente werden so in die Form gelegt, daß ihre gekrümmten Außenflächen, welche die ursprünglichen Zylinderringaußenflächen sind, die Ober- bzw. Unterseite der umgeformten Platte bilden. Es hat sich als günstig erwiesen, die Länge und Breite der Form in ihren Innenmaßen dem schalenförmigen Teil so anzupassen, daß der äußere Umfang des schalenförmigen Teils zuzüglich 2 mm die Formbreite und die Länge des schalenförmigen Teils zuzüglich 2 mm die Formlänge ergibt. Die optische Achse O-O des jeweiligen Teilkörpers, das ist die Richtung, in der er optisch genutzt wird, steht zumindest annähernd rechtwinklig auf der Achse X-X des Ausgangs-Quarzglaskörpers. Damit sind Platten mit einer Brechzahlhomogenität rechtwinklig zur optischen Achse O-O von 2·10⁻⁶ und besser herstellbar. Durchmesser und Höhe des Ausgangs-Quarzglaskörpers, die durch Anwendung unterschiedlicher Herstellungsund Umformtechnologien gezielt herstellbar sind, bestimmen dabei auch die Dimensionen der erfindungsgemäß anzufertigenden Quarzglasplatte, aus der ggf. ein genügend brechzahlhomogener Bereich herausgeschnitten werden kann. Weitere Möglichkeiten im Rahmen der Erfindung sind:
- die Herstellung von mehr als drei Segmenten aus einem Quarzglasring;
- die Herausarbeitung von optischen Bauteilen aus einer Quarzglaswalze oder mindestens einem der Segmente, deren/dessen optische Achse(n) (Nutzungsrichtungen) rechtwinklig zur Achse des Ausgangs-Quarzglaskörpers gerichtet sind/ist.

Die Erfindung wird nachtstehend an Hand der schematischen Zeichnung zweier Ausführungsbeispiele näher erläutert. Es zeigen:
- Fig. 1: einen Ausgangs-Quarzglaskörper in Seitenansicht,
- Fig. 2: eine ausgebohrte Glaswalze in Seitenansicht,
- Fig. 3: die ausgebohrte Glaswalze gemäß Fig. 2 in Draufsicht,
- Fig. 4: ein in eine Form eingelegtes Schalenteil und
- Fig. 5: die Herausarbeitung eines optischen Bauteils aus einem Schalenteil.

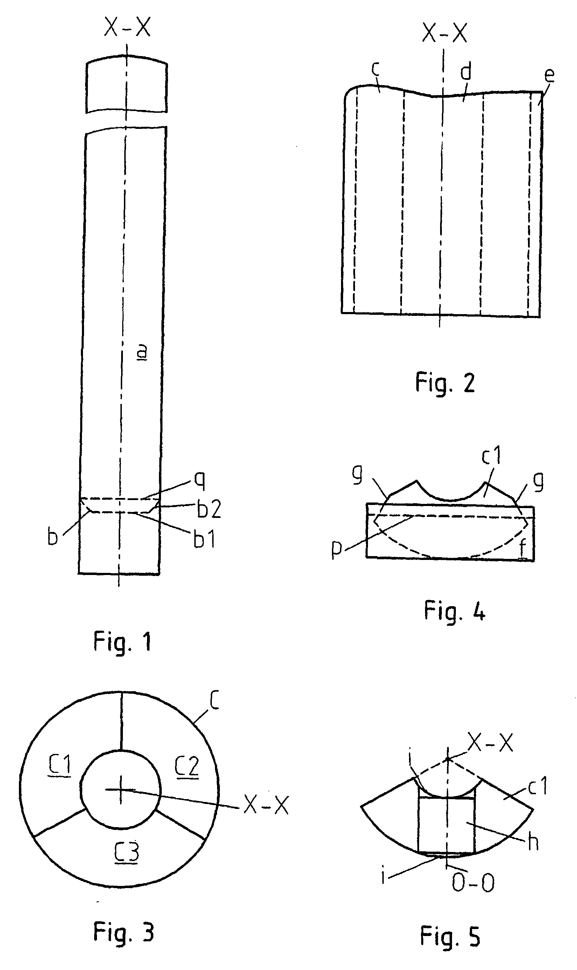

In Fig. 1 ist ein Quarzglaskörper, eine Quarzglaswalze a mit einer geometrischen Achse X-X dargestellt, in die als gestrichelte Linie b der Brechzahlverlauf über einem Durchmesser q eingetragen ist. Der Brechzahlverlauf ist in diesem Fall rotationssymmetrisch zur Achse X-X über den Querschnitt ausgebildet. Ausgehend von einem mittleren, ebenen oder nahezu ebenen Bereich b1, der auf Grund des Herstellungsverfahrens eine gleichbleibend niedrige bzw. keine Brechzahlveränderung anzeigt, steigt die Brechzahl in einem äußeren Bereich b2 parabelförmig an.

In Fig. 2 ist die Quarzglaswalze der Fig. 1 thermisch in einen Ausgangs-Quarzglaskörper c umgeformt worden, der einen bezüglich Fig. 1 unveränderten Homogenitätsverlauf aufweist und dessen zur Achse X-X rotationssymmetrischer mittlerer Bereich d mit einem Hohlbohrer herausgetrennt und dessen peripherer Mantelbereich e abgedreht oder abgeschliffen werden kann.

In Fig. 3 sind das Teil d (Fig. 2) mit günstiger Homogenität und das Teil e (Fig. 2) mit sehr Homogenität entfernt und der übrige Quarzglaskörper c ist in drei gleiche Teile c1, c2 und c3 aufgeteilt, von denen jedes ein Teil eines Zylinderringes ist.

In Fig. 4 befindet sich ein Zylinderringteil, bspw. c1, mit gebrochenen, rechtwinklig zur Zeichenebene bzw. parallel zu den Mantellinien des Zylinderringes verlaufenden Kanten g in einer Form f, in der es zur Platte p (gerissene Linie parallel zum Formboden) umgeformt wird, deren Brechzahlhomogenität rechtwinklig zur optischen Achse O-O entsprechend dem axialen Brechzahlverlauf and dem Brechzahlverlauf in Umfangsrichtung in der Walze a gut, jedoch nicht rotationssymmetrisch ist.

In Fig. 5 ist wieder ein Segment c1 dargestellt, aus dem ein optisch wirksames Bauteil h mit einer zur Achse X-X rechtwinkligen optischen Achse O-O herausgetrennt wird. Die Achse X-X selbst ist rechtwinklig zur Zeichenebene gerichtet. Für die weitere, zweckentsprechende Gestaltung dieses Bauteils kann es günstig sein, die gerundeten Flächen i in ebene Flächen abzuarbeiten.

Durch die Erfindung werden aus optisch schlecht verwertbaren Zylinder-bzw. Zyinderringteilen mit gegebener Brechzahlverteilung optisch hochwertige Platten erzeugt, deren Brechzahlhomogenität gemäß Vorstehendem von der Homogenität der Ausgangsteile bestimmt wird. Insbesondere wird die meist gute Homogenität der Ausgangsteile in axialer und peripherer Richtung genutzt, um die oft geforderte gute Homogenität an den erzeugten Platten zu erreichen.

### Bezugszeichenliste

- a: Ausgangs-Quarzglaskörper, Quarzglaswalze
- b: Linie (Brechzahlhomogenitätsverlauf)
- b1: ebener Bereich
- b2: äußerer Bereich (parabelförmig)
- c: Quarzglaskörper
- c1, c2, c3: Teile eines Zylinderringes
- d: mittlerer Bereich
- e: peripherer Mantelbereich
- f: Form
- g: gebrochene Kanten
- h: Bauteil
- i: gerundete Flächen
- p: Platte
- q: Durchmesser
- O-O: optische Achse
- X-X: geometrische Achse

## Patentansprüche

1. Verfahren zur Herstellung von Quarzglasplatten hoher Brechzahlhomogenität aus einem Ausgangs-Quarzglaskörper mit einer in seiner geometrischen Achse X-X und in Umfangsrichtung hohen Brechzahlhomogenität und einem zumindest angenähert rotationssymmetrisch zur Achse X-X veränderlichen Brechzahlverlauf, **dadurch gekennzeichnet, daß** der Ausgangs-Quarzglaskörper parallel zur Achse X-X in mindestens zwei schalenförmige Teile zerlegt wird, die getrennt in entsprechende Formen eingelegt und in diesen Formen so erhitzt werden, daß sie sich in vorzugsweise Quarzglasplatten von gewünschter Dicke umformen.

2. Verfahren gemäß Anspruch 1, **dadurch gekennzeichnet, daß** die Zerlegung in die schalenförmigen Teile in jedem Fall die Achse X-X enthält.

3. Verfahren gemäß Anspruch 2, **dadurch gekennzeichnet, daß** der Ausgangs-Quarzglaskörper zylindrisch ist.

4. Verfahren gemäß mindestens einem der Ansprüche 1 bis 3, **dadurch gekennzeichnet, daß** von dem Ausgangs-Quarzglaskörper ein in Richtung der Achse X-X verlaufender innerer Bereich ausreichender Brechzahlhomogenität und/oder ein in Richtung der Achse X-X verlaufender peripherer Bereich entfernt und danach die Zerlegung des so entstandenen Restkörpers in die schalenförmigen Teile erfolgt.

5. Verfahren gemäß Anspruch 4, **dadurch gekennzeichnet, daß** der innere Bereich des Ausgangs-Quarzglaskörpers mit einem Hohlbohrer herausgetrennt wird.

6. Verfahren gemäß Anspruch 4, **dadurch gekennzeichnet, daß** der periphere Bereich des Ausgangs-Quarzglaskörpers abgearbeitet wird.

7. Verfahren gemäß mindestens einem der Ansprüche 1 bis 4, **dadurch gekennzeichnet, daß** die äußeren, parallel zur Achse X-X verlaufenden Kanten der schalenförmigen Teile vor dem Einbringen dieser Teile in die Formen beschnitten werden.

8. Verfahren gemäß Anspruch 1 oder 4, **dadurch gekennzeichnet, daß** aus den schalenförmigen Teilen optische Bauteile herausgearbeitet werden, deren optische Achsen O-O zumindest nahezu rechtwinklig zur Achse X-X gerichtet sind.

## Claims

1. Method for producing quartz glass plates of high refractive index homogeneities out of a starting quartz glass body having a high refractive index homogeneity along its geometrical axis and in circumferential direction, and a variable refractive index curve at least approximately in rotation symmetry to the axis X-X, **characterized in that** the starting quartz glass body is separated into at least two concave parts in parallel to the axis X-X, which are separately inserted into corresponding moulds and which are heated in said moulds in such a way that they are transformed preferably into quartz glass plates of a desired thickness.

2. Method as claimed in claim 1, **characterized in that** the separation into the concave parts always includes the axis X - X.

3. Method as claimed in claim 2, **characterized in that** the starting quartz glass body is cylindrical.

4. Method as claimed in at least one of the preceding claims 1 to 3, **characterized in that** an interior range of the starting quartz glass body extending in direction of the axis X - X, whereby said interior range has a sufficient refractive index homogeneity, and/or a peripheral range extending in direction of the axis X - X are removed and then the separation of the remaining body obtained in such a manner into the concave parts is carried out.

5. Method as claimed in claim 4, **characterized in that** the interior range of the starting quartz glass body is cut out by means of a hollow drill.

6. Method as claimed in claim 4, **characterized in that** the peripheral range of the starting quartz glass body is worked off.

7. Method as claimed in at least one of the preceding claims 1 to 4, **characterized in that** the outer edges, extending in parallel to the axis X - X, of the concave parts are cut off before inserting said parts into the moulds.

8. Method as claimed in claim 1 or 4, **characterized in that** the optical components are worked out of said concave parts, whereby the optical axis O - O of said components is directed at least substantially at right angles to the axis X - X.

## Revendications

1. Un procédé permettant de fabriquer des plateaux de verres aux indices de réfraction très homogènes, à partir d'un corps à l'état initial dont l'homogénéité de l'indice de réfraction étant déjà très élevée sur l'axe géométrique X-X et en allant vers la circonférence, et dont l'évolution variable de l'indice de réfraction étant d'une symétrie axiale presque parfaite, au moins approximativement, par rapport à l'axe X-X, est **caractérisé en ce que** le corps quartzeux est découpé parallèlement à l'axe X-X, en au moins deux parties en forme de cuvette qui sont placées dans des moules appropriés pour y être chauffées de sorte qu'elles donnent de préférence enfin des plateaux de verre quartzeux aux épaisseurs requises.

2. Le procédé suivant la revendication 1 est **caractérisé en ce que** la découpe du corps initial en deux parties en forme de cuvette assure dans tous les cas la présence de l'axe X-X.

3. Le procédé suivant la revendication 2 est **caractérisé en ce que** le corps quartzeux initial est de forme cylindrique.

4. Le procédé suivant au moins une des revendications 1 à 3 est **caractérisé en ce que** la partie intérieure du corps quartzeux, dont l'indice de réfraction est assez homogène, et une partie périphérique suivant le sens de l'axe X - X seront enlevées, permettant au corps restant d'être ensuite séparé en deux parties formant des cuvettes.

5. Le procédé suivant la revendication 4 est **caractérisé en ce que** la partie intérieure du corps quartzeux initial est enlevée à l'aide d'un foret évidoir.

6. Le procédé suivant la revendication 4 est **caractérisé en ce que** la zone périphérique du corps quartzeux initial est enlevé par cisaillement.

7. Le procédé suivant une des revendications 1 à 4 est **caractérisé en ce que** les arêtes extérieures orientées en parallèle à l'axe X-X, des deux parties en forme de cuvette sont taillées avant d'être introduites dans les moules.

8. Le procédé suivant les revendications 1 ou 4 est **caractérisé en ce que**, à partir des éléments en forme de cuvette, sont formés des composants optiques dont les axes optiques O-O se trouvent disposés à peu près perpendiculairement à l'axe X-X.
